# EUROPEAN PATENT APPLICATION

(11) **EP 1 647 584 A1**
(43) Date of publication of application: **19.04.2006**
(21) Application number: 04024380.0
(22) Date of filing: 13.10.2004
(51) Int. Cl.: C09D 163/00, C08G 59/18

(54) **Aqueous epoxy resin systems**

(71) Applicant: Cytec Surface Specialties Austria GmbH, 8402 Werndorf (AT)
(72) Inventor: Grasböck, Rosemaria, Dr., 8010 Graz (AT); Gogg, Manfred, 8501 Lieboch (AT); Gerlitz, Martin, Dr., 8041 Graz (AT); Gollner, Andreas, 8054 Graz (AT); Wonner, Johann, Dr., 63110 Rodgau (DE); Lunzer, Florian, Dr., 08018 Barcelona (ES)
(74) Representative: Deckers, Hellmuth Alexander

(57) **Abstract**

An aqueous epoxy resin system **ABC** comprising an aqueously dispersed epoxy resin **A** having, on the average, at least one epoxy group per molecule, a water-soluble or water-dispersible curing agent **B** which comprises the reaction product of an amine **B1** having at least one primary and at least one secondary amino group, and an adduct **B2** of a polyalkylene ether polyol **B21** and an epoxide component **B22**, and an aminoplast compound **C** having a mass fraction of at least 0.1 % of sulphonate or sulphonic acid groups, a coating composition **ABCD** for thick layer applications comprising the aqueous epoxy resin system **ABC** and at least one particulate filler **D** selected from the group consisting of talc, mica, quartz, titanium dioxide, aluminium dioxide, calcium carbonate, and dolomite, and a process for coating mineral or concrete based substrates or floors with such coating compositions

## Description

The present invention relates to aqueous epoxy resin systems, particularly those that can be used in floorings or other covering of mineral based substrates.

Aqueous curing agents for epoxy resins have been described, inter alia, in EP 0 000 605 A1. These comprise the reaction product of at least one polyamine with an epoxy functional adduct of a polyfunctional epoxy compound and a polyoxyalkylene polyether polyol where there is a two- to tenfold excess of aminic hydrogen groups over the reactive epoxy groups.

Improvements have been described, i. a., in DE 198 48 113 C2 where the excess polyamine has to be distilled off, and the reaction product isolated. Such specially isolated amine adducts have been reported to indicate the end of their pot life when formulated into aqueous coating agents together with an epoxy resin and water.

During the experiments that have led to the present invention, it has been found that the epoxy resin systems known from the prior art are still not satisfactory when used in thick layer applications. It is desirable, especially for flooring applications, to be able to apply only one coating layer leading to the envisaged thickness, rather than having to apply multiple layers, with the need of drying and curing each individual layer before being able to apply the next layer. The problem of shrinking and consequent formation of voids and cracks usually limits the layer thickness that can be applied in one coating step.

It is therefore the object of the present invention to provide an aqueous epoxy resin coating system that can be applied in one coating step in a dry layer thickness of at least 4 mm without formation of cracks due to shrinkage upon drying.

This object is achieved by an aqueous epoxy resin system **ABC** comprising an aqueously dispersed epoxy resin **A** having, on the average, at least one epoxy group per molecule, a water-soluble or water-dispersible curing agent **B** which comprises the reaction product of an amine **B1** having at least one primary and at least one secondary amino group, and an adduct **B2** of a polyalkylene ether polyol **B21** and an epoxide component **B22,** and an aminoplast compound **C** having a mass fraction of at least 0.1 % of sulphonate or sulphonic acid groups.

The invention also relates to a water-soluble or water-dispersible curing agent composition **BC** which comprises a mixture of the reaction product of an amine **B1** having at least one primary and at least one secondary amino group, and adduct **B2** of a polyalkylene ether polyol **B21** and an epoxide component **B22**, and an aminoplast compound **C** having a mass fraction of at least 0.1 % of sulphonate or sulphonic acid groups.

The invention also relates to coating compositions **ABCD** for thick layer applications comprising an aqueous epoxy resin system **ABC** comprising an aqueously dispersed epoxy resin **A** having, on the average, at least one epoxy group per molecule, a water-soluble or water-dispersible curing agent **B** which comprises the reaction product of an amine **B1** having at least one primary and at least one secondary amino group, and adduct **B2** of a polyalkylene ether polyol **B21** and an epoxide component **B22**, and an aminoplast compound **C** having a mass fraction of at least 0.1 % of sulphonate or sulphonic acid groups, and at least one particulate filler **D** selected from the group consisting of talc, mica, quartz, titanium dioxide, aluminium dioxide, calcium carbonate, and dolomite.

The invention further relates to a process of coating a concrete or other mineral based substrates, especially floors, comprising mixing a water-soluble or water-dispersible curing agent **B** which comprises the reaction product of an amine **B1** having at least one primary and at least one secondary amino group, and an adduct **B2** of a polyalkylene ether polyol **B21** and an epoxide component **B22**, with an aminoplast compound **C** having a mass fraction of at least 0.1 % of sulphonate or sulphonic acid groups, dispersing the mixture in water, adding at least one particulate filler **D** selected from the group consisting of talc, mica, quartz, titanium dioxide, aluminium dioxide, calcium carbonate, and dolomite, adding thereto, before starting to use the composition, an epoxy resin **A** comprising epoxide compounds having at least epoxide group per molecule, and then applying the mixture thus obtained to a concrete or other mineral based substrate or floor.

The water-soluble or water-dispersible curing agent **B** comprises the reaction product of an amine **B1** having at least one primary and at least one secondary amino group, and an adduct **B2** of a polyalkylene ether polyol **B21** and an epoxide component **B22**.

The amines **B1** are preferably purely aliphatic amines, i. e. those where only aliphatic organic groups which may be linear, branched or cyclic are present in the molecule. Preferred aliphatic amines are diethylene triamine, triethylene tetramine, tetraethylene pentamine, the higher diaminopolyethylene imines, 1-(2-aminoethyl)piperidine, 1-(2-aminoethyl)piperazine, N-(2-aminoethyl)-1,3-propane diamine, and N,N-bis(2-aminoethyl)-1,3-propane diamine. Especially preferred are diethylene triamine, triethylene tetramine, tetraethylene pentamine, and mixtures thereof.

The polyether polyols **B21** are preferably addition products of alkylene oxides to polyfunctional alcohols or mixtures thereof, such as the diols ethylene and propylene glycol, neopentyl glycol, 1,4-butane diol, triols like glycerol, and higher polyfunctional alcohols such as pentaerythritol or sorbitol. It is also preferred that the mass fraction of such polyvalent (i. e. trifunctional or higher) alcohols does not exceed 10 % of the mass of all alcohols. Especially preferred are polyethylene glycol and copolymers comprising oxyethylene and oxypropylene moieties, where at least a mass fraction of 20 %, more preferably at least 30 %, is constituted of oxyethylene groups.

The epoxy compounds **B22** are preferably glycidyl ethers of dihydric alcohols or phenols, or novolaks, or glycidyl esters of dicarboxylic acids. Among the phenols, resorcinol, hydroquinone, 2,2-bis-(4-hydroxyphenyl)-propane (bisphenol A), mixtures of isomers of dihydroxydiphenylmethane (bisphenol F), tetrabromo bisphenol A, 4,4'-dihydroxydiphenyl cyclohexane, 2,2-bis-(4-hydroxy-3-methylphenyl)-propane, 4,4'-dihydroxydiphenyl, 4,4'-dihydroxybenzophenone, 1,1-bis-(4-hydroxyphenyl)-ethane, 2,2-bis-[4-(2'-hydroaypropoxy)phenyl]-propane, 1,1-bis-(4-hydroxyphenyl)-isobutane, 2,2-bis-(4-hydroxy-3-tert.-butylphenyl)-propane, bis-(2-hydroxynaphthyl)-methane, 1,5-dihydroxy naphthalene, tris-(4-hydroxyphenyl)-methane, bis-(4-hydroxyphenyl)ether, bis-(4-hydroxyphenyl)sulphone, as well as products of halogenation and hydration of the compounds mentioned. Epoxy resins based on bisphenol A are especially preferred.

They preferably have a specific epoxide group content (amount of substance of epoxide groups divided by their mass) of from 0,5 to 10 mol/kg, especially preferably from 1,0 to 7,0 mol/kg. They can be saturated or unsaturated, aliphatic and mixed aliphatic-aromatic compounds and have at least one, preferably at least two epoxide groups per molecule, on the average. They can also have hydroxyl groups in their molecules. It is also possible to use diepoxy alkanes made by epoxidation of diolefins. Particularly preferred are the diglycidyl ether of bisphenol A (BADGE) and bisphenol F, and epoxy resins based on advancement products of BADGE and bisphenol A. These BADGE based resins are commonly referred to as type 1, type 5, type 7 etc. resins, according to their degree of polymerisation. It is particularly preferred to use a mixture of BADGE and type 1 epoxy resins.

The adduct is made by reacting the polyether polyols **B21** and the epoxy componds **B22** in the presence of a catalyst selected from the group consisting of Lewis acids such as boron trifluoride and complexes thereof with ethers or amines.

The epoxy resin **A** can be a non-modified or hydrophilically modified epoxy resin, selected from the same group as stated under **B22.** Hydrophilic modification of the epoxy resins is made according to the usual practice, by adding an adduct such as those described as **B2** as an emulsifier to the epoxy resin, and dispersing the mixture, or by dispersing an unmodified epoxy resin in an aqueous dispersion of the emulsifier.

A special advantage of the curing agent of the present invention is that also non-modified epoxy resins can effectively be emulsified therewith, thus avoiding the need to use hydrophilic modification. It is preferred in this case to reduce the viscosity of the epoxy resin by adding a mass fraction of up to 20 % of a reactive diluent such as a monoepoxide, preferably ethers of glycidyl alcohol with aliphatic monohydric alcohols or monofunctional phenols. It is preferred to use liquid epoxy resins such as BADGE itself, and modified liquid or solid epoxy resins mixed with reactive diluents selected from the group consisting of butyl glycidyl ether, hexyl glycidyl ether, phenyl glycidyl ether and cresyl glycidyl ether, or mixtures thereof

The aminoplast compound **C** having a mass fraction of at least 0.1 % of sulphonate or sulphonic acid groups preferably comprises a mass fraction of from 1 % to 20 %, preferably from 2 % to 10 %, of sulphonamide moieties in their structure whereby the sulphonic acid or sulphonate group is incorporated into the aminoplast resin by cocondensation of amino functional sulphonic acids or derivatives thereof, with formaldehyde and aminoplast formers selected from the group consisting of melamine, urea, guanamines such as acetoguanamine, benzoguanamine and caprinoguanamine, thiourea, glycoluril, and ethylene urea. Such sulphonamide modified melamine resins are described in more detail in US 4,133,843 and EP 0 192 106 A1 which are incorporated by this reference. The sulphonamide compounds which can be used in the condensation to make an aminoplast compound **C** according to the present invention are preferably selected from the group consisting of amidosulphonic acid itself, aminoethane sulphonic acid, the amides and salts thereof, as well as arylsulphonamides such as benzene sulphonamide, toluene sulphonamide, and diphenyl sulphonamide. These compounds are incorporated by formation of the N-methylol compunds which then react with further formaldehyde and the aminoplast former.

The aqueous epoxy resin system of the present invention is preferably made in a multi-step process, comprising
- as the first step, preparing an adduct **B2** of a polyalkylene ether polyol **B21** and epoxy resins or compounds **B22,** using Lewis acids or complex salts thereof as catalysts,
- adding the amine **B1** which reacts with the epoxy groups of **B2,** preferably by consuming at least 90 % of these epoxy groups, more preferred, at least 95 %, and especially preferred, at least 98 %, of the epoxy groups of **B2**,
- optionally adding a polycarboxylic acid **B3** which reacts with residual amine **B1** at elevated temperature to form a polyamide or amide oligomer,
- removing the water formed by the reaction, preferably by azeotropic distillation,
- optionally adding a monoepoxy compound or a mixture ofmonoepoxy compounds **B4,**
- and optionally adding a polyamine, preferably a diamine **B5**,
- optionally, neutralisation of the resulting product with acid to convert at least 20 % of the amino groups into the respective cations, and
- dispersing the optionally neutralised reaction product in water, and finally
- adding the sulphonamide modified aminoplast resin **C**, and optionally
- adding further water to adjust the mass fraction of solids to between 50 % and 70 %.

The polycarboxylic, preferably dicarboxylic, acid **B3** is added to consume residual amide. It has surprisingly been found that the small portion of polyamide or amide oligomer formed in this reaction further enhances the properties of the aqueous epoxy resin system of the present invention. The acid **B3** is preferably selected from the group consisting of adipic acid, glutaric acid, succinic acid, mixtures thereof, and also, other dicarboxylic acids such as C7 to C12 acids, and fatty acid dimers having up to 50 carbon atoms.

It has also been found advantageous to include a reaction step where residual amine or also, amide oligomer is consumed by reaction with a monoepoxide **B4**, such as butyl glycidyl ether, hexyl glycidyl ether, 2-ethylhexyl glycidyl ether, or also, aromatic monoepoxy compounds such as cresyl or xylenyl glycidyl ethers. It is especially preferred to employ mixtures or aliphatic and aromatic glycidyl ethers.

It is also preferred to add further primary amine **B5**, especially diamine, in the last step before neutralisation, to enhance the hydrophilicity of the reaction product formed. Such diamines are preferentially chosen from diamines having two primary amino groups, namely cycloaliphatic diamines such as isophorone diamine, branched aliphatic amines such as trimethylhexane diamine isomers, and mixed aromatic-aliphatic amines having the amino groups bound to aliphatic carbon atoms such as meta-xylylene diamine and tetramethyl xylylene diamine.

It is preferred to include at least one of the optional steps of adding a polycarboxylic acid **B3**, adding a monoepoxide **B4,** and adding a further amine **B5.**

The aqueous epoxy resin systems of the present invention, preferably made according to the process outlined supra, can be used in any epoxy resin based coatings. It has been found that such aqueous systems are especially suited for thick layer applications leading to a dried coating thickness in excess of 1 mm, and yielding coating layers having no crack formation upon drying even in layer thickness of from 2 mm to 5 mm, or more. This advantageous property is apparently due to the combination of the amino curing agent and the sulphonamide modified aminoplast resin additive. Using a similar combination with the identical amino curing agent and epoxy resin, but without the modified aminoplast resin leads to crack formation in the same applied layer thickness, while no cracks can be seen in a coating system according to the invention.

The invention is further illustrated in the following examples.

### Examples

### Example 1

6 kg of polyethylene glycol 600 (average molar mass 600 g/mol), 10.3 kg of BADGE and 1.2 kg of a type 1 epoxy resin (®Epikote 1001, Resolution BV) were mixed, 30 g of boron trifluoride amine complex (®Anchor 1040) were added, and the mixture was heated to 80 °C to form a clear mass. Temperature was then raised to 170 °C, after five hours of stirring under a nitrogen blanket, the epoxy group content reached a constant value. 4 kg of xylene were added, and after cooling, the adduct was added slowly to 10 kg of triethylene tetramine. Xylene was then distilled off partly, and 1 kg of adipic acid were added. Water formed in this step was azeotropically removed with the residual xylene.

### Example 2

The reaction mixture of example 1 was treated with a mixture of 1.2 kg of cresyl glycidyl ether and 0.86 kg of butyl glycidyl ether. After the evolution of heat had ceased, 1.3 kg of meta xylylene diamine were added, and the mixture was stirred for two more hours.

### Example 3

900 g of acetic acid were slowly added to the product of Example 1 (Example 3.1) and, in the alternative, to the product of Example 2 (Example 3.2) under stirring, and this reaction mixture was poured into 14 kg of deionised water under rapid stirring. A clear solution was obtained in each case.

### Example 4

One half of the solution of Example 3.2 was left unchanged (designated as "CA0"), and the other half was mixed with 5 kg of an amidosulphonic acid sodium salt modified melamine resin in the form a 70 % strength aqueous solution. The viscosity was adjusted by adding a further 500 g of deionised water to form a 66 % strength dispersion (designated as curing agent "CA1").

### Example 5

A coating composition for flooring was prepared from the curing agent CA0 of Example 3.2, according to the following recipe:

### Component 5.1:

8.6 kg of the curing agent CA0 were mixed with 6.7 kg of deionised water, 1.2 kg of a 60 % strength solution of a polyether modified acid group containing wetting and dispersing agent (®Additol VXW 6208; Surface Specialties Austria GmbH) and 0,6 kg of a silicone based defoaming additive (®Efka 2527); 3.7 kg of a titanium dioxide pigment (®Kronos 2059, Kronos Titan GmbH), 5.7 kg of mica (®Plastorit 000; Naintsch Mineralwerke); 34.8 kg of finely milled quartz (Quarzmehl W3, Quarzwerk Frechen) in the sequence stated and well dispersed in a dissolver for ten minutes at approximately 4000 min⁻¹ to yield a homogeneous mixture. Temperature during mixing was kept below 35 °C. Another portion of deionised water was added (3.9 kg), followed by a mixture of 20.9 kg of quartz sand (diameter fraction of from 0.1 mm to 0.5 mm) and 13.9 kg of quartz sand having a diameter range from 0.3 mm to 0.9 mm. The mixture was homogenised for approximately four minutes at 2000 min⁻¹.

### Component 5.2:

®Beckopox EP 128 (liquid epoxy resin comprising a reactive diluent, specific content of epoxy groups 5.1 mol/kg, viscosity at 23 °C 1100 mPa·s; Surface Specialties Germany GmbH & Co. KG).

### Coating Composition 5:

9.7 kg of component 5.2 were added to component 5.1 and intimately mixed to yield a coating composition having a mass fraction of solids of 86 %, and a pigment to binder mass ratio of approximately 5.2 : 1, the mass fraction of water in the mixture being approximately 13 %. The stoichiometric ratio of curing agent to epoxy resin was 90 %.

### Example 6

A further coating composition for flooring was prepared from the curing agent CA1 of Example 4, according to the following recipe:

### Component 6.1

9.6 kg of curing agent CA1 were mixed with 6.5 kg of deionised water, 1.2 kg of ®Additol VXW 6208 wetting and dispersing agent, 0.6 kg of ®Efka 2527 defoamer, 3.7 kg of ®Kronos 2059 titanium dioxide pigment, 5.6 kg of ®Plastorit 000 talc, 34.5 kg of finely milled quartz (Quarzmehl W 3) in the stated sequence and dispersed in a dissolver for 10 minutes at 4000 min⁻¹. Then, 3.9 kg of deionised water, 20.6 kg of quartz sand having a diameter range of from 0.1 mm to 0.5 mm and 13.8 kg of quartz sand having a diameter range of from 0.3 mm to 0.9 mm were added and homogenised for approximately four minutes at 2000 min⁻¹.

### Component 6.2

®Beckopox EP 128 (liquid epoxy resin comprising a reactive diluent, specific content of epoxy groups 5.1 mol/kg, viscosity at 23 °C 1100 mPa·s; Surface Specialties Germany GmbH & Co. KG).

### Coating composition 6:

8.7 kg of component 6.2 were added to component 6.1 and intimately mixed to yield a coating composition having a mass fraction of solids of 86 %, and a pigment to binder mass ratio of approximately 5.2 : 1, the mass fraction of water in the mixture being approximately 13 %. The stoichiometric ratio of curing agent to epoxy resin was 90 %.

### Example 7

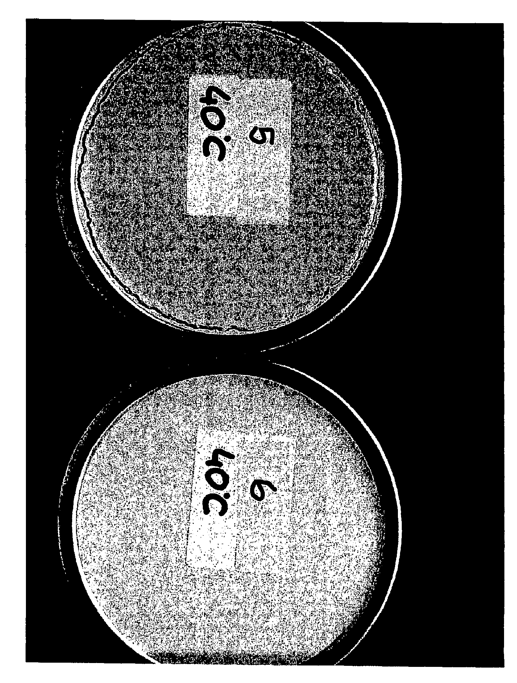

Coating compositions 5 and 6 were each applied to a test pan having a depth of 7 mm and a diameter of 90 mm. The coating layers were dried at 40 °C for two weeks and visually inspected after cooling to room temperature (23 °C) under identical conditions at standard relative humidity of 50 %. While no cracks were formed in the case of coating composition 6 (right part of the photograph in Fig. 1), there is a marked crack formation in the case of coating composition 5 (left part of the photograph in Fig. 1). This is also evident from the attached photographs (Fig. 1). Crack formation is even more apparent when larger areas are coated.

## Claims

1. An aqueous epoxy resin system **ABC** comprising an aqueously dispersed epoxy resin **A** having, on the average, at least one epoxy group per molecule, a water-soluble or water-dispersible curing agent **B** which comprises the reaction product of an amine **B1** having at least one primary and at least one secondary amino group, and an adduct **B2** of a polyalkylene ether polyol **B21** and an epoxide component **B22**, and an aminoplast compound **C** having a mass fraction of at least 0.1 % of sulphonate or sulphonic acid groups.

2. The aqueous epoxy resin system **ABC** of claim 1 wherein the curing agent **B** comprises the reaction product of the components **B1** and **B2** as claimed in claim 1 and at least one further component selected from the group consisting of polycarboxylic acids **B3,** monoepoxides **B4,** and primary amines **B5.**

3. A water-soluble or water-dispersible curing agent composition **BC** which comprises a mixture of the reaction product of an amine **B1** having at least one primary and at least one secondary amino group, and adduct **B2** of a polyalkylene ether polyol **B21** and an epoxide component **B22**, and an aminoplast compound **C** having a mass fraction of at least 0.1 % of sulphonate or sulphonic acid groups.

4. A process for the preparation of the water-soluble or water-dispersible curing agent composition **BC** of claim comprising the steps of
- as the first step, preparing an adduct **B2** of a polyalkylene ether polyol **B21** and epoxy resins or compounds **B22,** using Lewis acids or complex salts thereof as catalysts,
- as second step, adding the amine **B1** which reacts with the epoxy groups of **B2,** preferably by consuming at least 90 % of the epoxy groups of **B2,**
- as third step, optionally, neutralisation of the resulting product with acid to convert at least 20 % of the amino groups into the respective cations, and
- as fourth step, dispersing the optionally neutralised reaction product in water, and finally
- as fifth step, adding the sulphonamide modified aminoplast resin **C**.

5. The process of claim 4 additionally comprising the step of
- adding, after the second step, a polycarboxylic acid **B3** which reacts with residual amine **B1** at elevated temperature to form a polyamide or amide oligomer, and then
- removing the water formed by the reaction, preferably by azeotropic distillation.

6. The process of claim 4 additionally comprising the step of
- adding, after the second step, a monoepoxy compound or a mixture of monoepoxy compounds **B4.**

7. The process of claim 4 additionally comprising the step of
- adding, after the second step, a primary polyamine **B5.**

8. A coating composition **ABCD** for thick layer applications comprising the aqueous epoxy resin system **ABC** of claim 1 and at least one particulate filler **D** selected from the group consisting of talc, mica, quartz, titanium dioxide, aluminium dioxide, calcium carbonate, and dolomite.

9. A coating composition **ABCD** for thick layer applications comprising the aqueous epoxy resin system **ABC** of claim 2 and at least one particulate filler **D** selected from the group consisting of talc, mica, quartz, titanium dioxide, aluminium dioxide, calcium carbonate, and dolomite.

10. A process of coating a concrete or other mineral based floor, comprising mixing a water-soluble or water-dispersible curing agent **B** which comprises the reaction product of an amine **B1** having at least one primary and at least one secondary amino group, and an adduct **B2** of a polyalkylene ether polyol **B21** and an epoxide component **B22**, with an aminoplast compound **C** having a mass fraction of at least 0.1 % of sulphonate or sulphonic acid groups, dispersing the mixture in water, adding at least one particulate filler **D** selected from the group consisting of talc, mica, quartz, titanium dioxide, aluminium dioxide, calcium carbonate, and dolomite, adding thereto, before starting to use the composition, an epoxy resin **A** comprising epoxide compounds having at least epoxide group per molecule, and then applying the mixture thus obtained to a concrete or other mineral based floor.
